Europäisches Patentamt

European Patent Office

Office européen des brevets

(19)

(11) Veröffentlichungsnummer : **0 110 120**
**B1**

(12) EUROPÄISCHE PATENTSCHRIFT

(45) Veröffentlichungstag der Patentschrift :
18.06.86

(21) Anmeldenummer : 83110624.0

(22) Anmeldetag : 25.10.83

(51) Int. Cl.⁴ : **A 01 F 25/20**, A 01 D 34/38,
F 15 B 11/04

(54) Geschwindigkeitsgesteuerte Vorrichtung zum Herausschneiden und Entfernen von Blöcken aus einem Silofutterstock.

(30) Priorität : 11.11.82 DE 3241633

(43) Veröffentlichungstag der Anmeldung :
13.06.84 Patentblatt 84/24

(45) Bekanntmachung des Hinweises auf die Patenterteilung : 18.06.86 Patentblatt 86/25

(84) Benannte Vertragsstaaten :
AT BE CH DE FR GB IT LI NL SE

(56) Entgegenhaltungen :
DE-A- 2 307 689
DE-C-   971 491
FR-A- 1 279 918
FR-A- 2 268 177
GB-A-   232 349
US-A- 4 384 443

(73) Patentinhaber : von der Heide, Hans
Ibbenbürener Strasse 17
D-4533 Laggenbeck (DE)

(72) Erfinder : von der Heide, Hans
Ibbenbürener Strasse 17
D-4533 Laggenbeck (DE)

(74) Vertreter : Patentanwälte Schulze Horn und Hofmeister
Goldstrasse 36
D-4400 Münster (DE)

## Beschreibung

Die Erfindung betrifft eine an einem Fahrzeug befestigte Vorrichtung zu Herausschneiden und Entnehmen von Blöcken aus einem Silofutterstock, mit einem auf einer Brücke hin und her laufenden, ein Schneidmesser tragenden, hydraulisch angetriebenen Fahrwerk, mit einem Steuerelement für die das Fahrwerk antreibende Hydraulikflüssigkeit, das über einen Zulauf und einen Rücklauf mit einer Hydraulikpumpe des Fahrzeugs verbunden ist.

Eine entsprechende Vorrichtung zum Herausschneiden und Entnehmen von Blöcken aus einem Silofutterstock, die insbesondere an Traktoren anbringbar ist, ist bereits aus der DE-C-2 307 689 bekannt. Diese Vorrichtungen besitzen eine automatische Umsteuerung des Fahrwerks des Schneidmessers, wenn die das Fahrwerk tragende U-förmige Brücke einmal durchlaufen ist. Das Schneidmesser läuft dann automatisch, einen neuen Schnitt durchführend, zurück.

Nachteilig bei den bekannten Vorrichtungen ist es für einige Benutzer, daß die Geschwindigkeit des Überlaufens der Brücke von dem Antrieb der Hydraulikpumpe zur Erzeugung des benötigten Hydraulikstroms abhängt. Falls dieser Antrieb geregelt wird, kann die Bewegungsgeschwindigkeit des Fahrwerks eingestellt werden. Wenn die Pumpe aber z. B. mit dem Antriebsmotor eines Traktors gekoppelt ist, kann die Geschwindigkeit nur über die Drehzahl des Motors des Traktors geregelt werden. In beiden Fällen ist eine ideale Einstellung der gewünschten Schnittgeschwindigkeit nicht ohne weiteres möglich, die aber für das Schneiden verschiedener Silagegüter vorteilhaft ist.

Aufgabe der Erfindung ist es demgemäß, eine Vorrichtung zum Herausschneiden und Entnehmen von Blöcken aus einem Silofutterstock zu schaffen, bei welcher die vorgenannten Nachteile nicht mehr auftreten und bei welcher es möglich ist, unabhängig von dem Antrieb der den Hydraulikstrom erzeugenden Pumpe die Schnittgeschwindigkeit des Schneidmessers bzw. die davon abhängende Geschwindigkeit der Bewegung des Fahrwerks einzustellen.

Diese Aufgabe wird bei der eingangs genannten Vorrichtung erfindungsgemäß dadurch gelöst, daß die Zulauf- und die Rücklaufleitung durch eine weitere Leitung miteinander verbunden sind und daß zur Regelung der Bewegungsgeschwindigkeit des Fahrwerks der Durchfluß durch diese Leitung einstellbar ist.

Vorteilhaft kann die Leitung eine die Zulaufleitung mit der Rücklaufleitung verbindende Bohrung im Gehäuse des Steuerelements sein, deren Strömungsquerschnitt veränderbar ist. Diese Veränderung kann dadurch vorgenommen werden, daß ein Bolzen mittels eines Handrades oder einer Rändelschraube über ein Gewinde in die Bohrung mehr oder weniger tief eingeschraubt wird.

Im folgenden wird ein Ausführungsbeispiel der Erfindung anhand der Zeichnung näher beschrieben. Es zeigen :

Figur 1   das Hydraulikschema zum Antrieb des Fahrwerks des Schneidmessers,

Figur 2   einen Schnitt durch das Gehäuse des Steuerelementes zur Steuerung des Fahrwerks und

Figur 3   einen Teilschnitt durch das Gehäuse gemäß Figur 2 gemäß der Linie II-II.

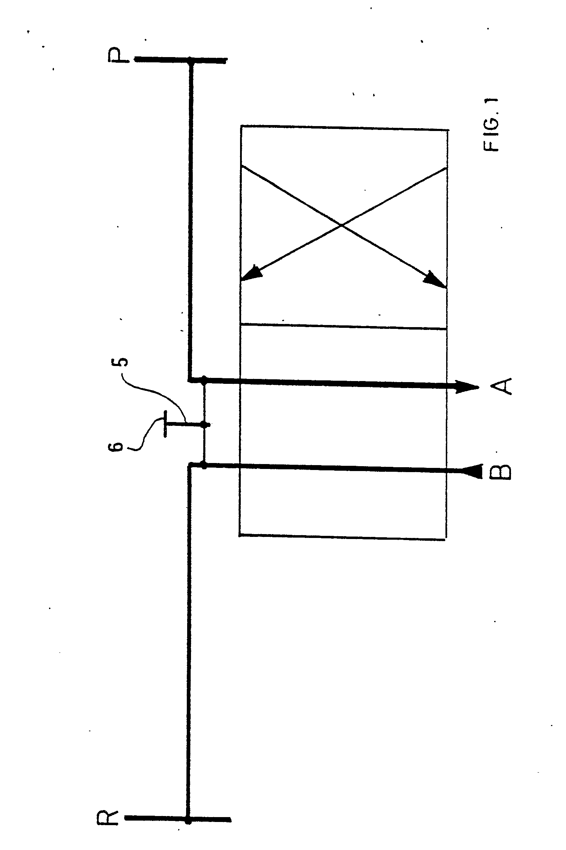

Gemäß Figur 1 erzeugt eine Hydraulikpumpe einen Hydraulik-Druckstrom, der von P nach R fließt. Der Anschluß der Zulaufleitung ist mit A und der Anschluß der Rücklaufleitung mit B bezeichnet. Ein in einem Gehäuse 4 befindliches Steuerelement sorgt dafür, daß der Zulauf und der Rücklauf bei dem Verbraucher, hier der Antrieb des Fahrwerks, umgekehrt werden kann, so daß dieses vorwärt und rückwärts läuft. Diese Umschaltung erfolgt automatisch durch das Anlaufen an einem Anschlag, wenn die U-förmige Brücke als Träger des Fahrwerks einmal durchlaufen worden ist.

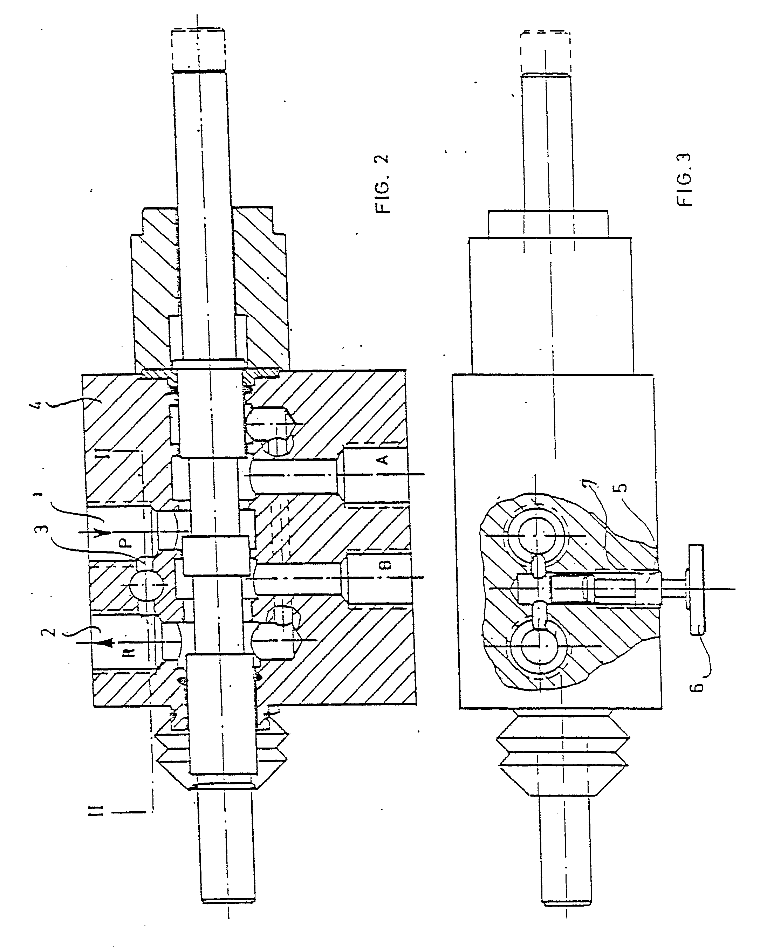

Gemäß Figur 2 ist in einem Gehäuse 4 des Steuergerätes des Fahrwerks ein Kolben 9 angeordnet, der in seiner gezeigten Stellung den Durchlauf von P nach A und zurück bon B nach R gestattet. Wird der Kolben in die gestrichelt gezeigte Stellung nach rechts verschoben, wird die Durchlaufrichtung umgekehrt und damit wird der Verbraucher, z. B. ein Hydraulikmotor in seiner Drehrichtung umgekehrt. Nach abermaligem Durchlaufen der Brücke wird dann der Kolben in seine gezeigte Stellung zurückverschoben und das Fahrwerk beginnt mit einem neuen Durchlauf.

Die Zuleitung und die Ableitung des Hydraulikstromes erfolgt durch die Leitungen 1 und 2, die durch eine Bohrung 3 miteinander verbunden sind. Den Durchlaßquerschnitt der Bohrung 3 kann ein Bolzen 5 einstellen, der mittels eines Gewindes 7 und eines Handrades 6 bzw. einer entsprechenden Rändelschraube einstellbar ist. Das handradferne Ende des Bolzens dringt dabei in die Verlängerung der Gewindebohrung ein und vermag im Extremfall die Bohrung 3 vollkommen zu schließen. Dann läuft das Fahrwerk mit Höchstgeschwindigkeit, während es bei der in Figur 3 gezeigten Stellung mit der geringsten Geschwindgkeit läuft, da dann die Bohrung 3 voll geöffnet ist. Eine Einstellung der Geschwindigkeit zwischen der höchsten und niedrigsten Geschwindigkeit erfolgt durch das Hineindrehen des Bolzens 5 durch das Handrad 6 in mehr oder weniger großem Maße. Um einen Lecköstrom auszuschließen, weist dabei das den Durchfluß regelnde Ende des Bolzens 5 einen Durchmesser entsprechend dem Durchmesser der Gewindebohrung im glatten Teil sowie einen Dichtring auf.

Im übrigen sind sowohl die eigentliche Vorrichtung zum Herausschneiden und Entnehmen von Blöcken aus einem Silofutterstock als auch die verwendete Umschalteinrichtung bzw. das Steuerelement dem Fachmann wohlbekannt, so daß eine weitergehende Beschreibung entfallen kann.

Ersichtlicherweise ist es gemäß der Erfindung auf einfachste Weise möglich, unabhängig von dem Pumpenantrieb eine Geschwindigkeitsregelung des Schneidvorganges zu ermöglichen und es kann so von einer idealen Lösung der anstehenden Probleme gesprochen werden. Zu berücksichtigen ist dabei, daß die eigentliche Schneidbewegung des Messers von der Fahrgeschwindigkeit des Fahrwerks abhängig gemacht werden kann, so daß auch die Relativgeschwindigkeit des Messers gegenüber dem zu schneidenden Gut neben dem Messervorschub eingestellt werden kann, so daß für jedes zu schneidende Gut die jeweils optimale Geschwindigkeit einstellbar ist.

**Patentansprüche**

1. An einem Fahrzeug befestigte Vorrichtung zu Herausschneiden und Entnehmen von Blöcken aus einem Silofutterstock, mit einem auf einer Brücke hin und her laufenden, ein Schneidmesser tragenden, hydraulisch angetriebenen Fahrwerk, mit einem Steuerelement für die das Fahrwerk antreibende Hydraulikflüssigkeit, das über einen Zulauf und einen Rücklauf mit einer Hydraulikpumpe des Fahrzeugs verbunden ist, dadurch gekennzeichnet, daß die Zulauf- und Rücklaufleitung (1 und 2) durch eine weitere Leitung miteinander verbunden sind und daß zur Regelung der Bewegungsgeschwindigkeit des Fahrwerks der Durchfluß durch diese Leitung einstellbar ist.

2. Vorrichtung nach Anspruch 1, dadurch gekennzeichnet, daß die Leitung eine die Zulaufleitung (1) mit der Rücklaufleitung (2) verbindende Bohrung (3) im Gehäuse (4) des Steuerelementes ist, deren Strömungsquerschnitt veränderbar ist.

3. Vorrichtung nach Anspruch 2, dadurch gekennzeichnet, daß zur Querschnittsveränderung ein Bolzen (5) vorhanden ist, der mittels eines Handrades (6) und eines Gewindes (7) mehr oder weniger tief in den Durchflußraum (8) der Bohrung (3) einschraubbar ist.

**Claims**

1. An apparatus, adapted to be mounted to a vehicle, for the cutting out and taking out of blocks from a silo fodder stock, comprising a hydraulically driven chassis mounted for reciprocating motion on a bridge and supporting a cutting blade, and a control element for the hydraulic liquid which drives the chassis, the control element being connected, to a hydraulic pump of the vehicle through a feed line and a return line, characterized in that the feed and return lines (1 and 2) are interconnected by a further line, and that the flow rate through said further line is controllable for controlling the speed of movement of the chassis.

2. The apparatus according to claim 1, characterized in that said further line comprises a bore (3) formed in the housing (4) of the control element and interconnecting the feed line (1) and the return line (2), the flow cross-section of said bore being variable.

3. The apparatus according to claim 2, characterized in that a pin (5) is provided for the variation of the cross-section, which pin is adapted to be threadingly screwed to a greater or lesser depth into the flow area (8) of the bore (3) by means of a handwheel (6) and threads (7).

**Revendications**

1. Dispositif pour découper et prélever des blocs d'ensilage, ce dispositif étant fixé à un véhicule et comportant un équipage mobile entraîné hydrauliquement, en va-et-vient sur un pont, et portant un couteau de découpe et un élément de commande pour commander le fluide hydraulique entraînant cet équipage mobile, cet élément de commande étant relié, par une arrivée et une sortie, à une pompe hydraulique du véhicule, caractérisé en ce que la conduite d'arrivée et la conduite de sortie (1 et 2) sont mutellement reliées par une autre conduite et en ce que, pour le réglage de la vitesse du mouvement de l'équipage mobile, le débit passant par cette autre conduite est réglable.

2. Dispositif selon la revendication 1, caractérisé en ce que la conduite est un trou (3) dans le carter (4) de l'élément de commande, ce trou reliant la conduite d'arrivée (1) à la conduite de retour (2), et la section d'écoulement de ce trou pouvant être modifiée.

3. Dispositif selon la revendication 2, caractérisé en ce qu'il y a, pour modifier la section, un boulon (5) qui, au moyen d'un volant à main (6) et d'un filetage (7) peut être vissé plus ou moins profondément dans le volume de passage (8) du trou (3).

R        6   5        P

B    A

FIG. 1

0 110 120

FIG. 2

FIG. 3